# FASCICULE DE BREVET EUROPEEN

(11) **EP 0 469 961 B1**
(45) Date de publication et mention de la délivrance du brevet: **20.03.1996**
(21) Numéro de dépôt: 91402047.4
(22) Date de dépôt: 23.07.1991
(51) Int. Cl.: C09D 5/29, C09D 175/04

(54) **Revêtement multicolore, son procédé de préparation, matériau composite mettant en oeuvre un tel revêtement**
Mehrfarbige Beschichtung, Verfahren zu ihrer Herstellung, Verbundwerkstoff mit dieser Beschichtung
Multicolour coating, process for its preparation, composite materials comprising such a coating

(30) Priorité: 03.08.1990 FR 9009983
(43) Date de publication de la demande: 05.02.1992
(73) Titulaire: ELF ATOCHEM S.A., F-92800 Puteaux (FR)
(72) Inventeur: d'Herbecourt, Bruno, F-27300 Bernay (FR); Copin, Gilbert, F-27550 Nassandres (FR)

(56) Documents cités:
- EP-A- 0 047 508
- EP-A- 0 193 301
- FR-A- 2 273 679

## Description

L'invention, objet de la présente demande concerne un revêtement sous forme de film multicolore et son procédé de préparation.

Par multicolore, on entend un revêtement de couleur non uniforme à l'oeil. A titre d'exemple de revêtement multicolore on peut citer un revêtement d'aspect moucheté, granité...

EP 193301 au au nom de ICI décrit des revêtements multicolores pour la décoration contenant des billes de polymères colorées ou teintées, dispersées dans un film de couleur ou de nuance différentes, contenant de préférence un latex de polymère en dispersion dans l'eau.

Ces compositions sont mises en oeuvre à l'aide d'un rouleau applicateur sur de substrats tels que murs et plafonds.

Le revêtement multicolore selon l'invention est constitué
- d'une ou plusieurs sous-couches de teinte uniforme ne contenant pas de poudres thermoplastiques de même nature que celles de(s) couche(s) superficielle(s).
- d'une ou plusieurs couches superficielles (revêtement superficiel) comprenant une dispersion, dans un vernis incolore, de poudres de résines thermoplastiques colorées dans la masse et dont au moins une teinte est de couleur différente de celle utilisée en sous-couche(s) et éventuellement de poudres non colorées.

Une variante du revêtement multicolore selon l'invention est constituée:
- d'une ou plusieurs couches de vernis incolore au sein duquel sont dispersées des poudres thermoplastiques de couleur(s) différente(s).

La (ou les) couche superficielle du revêtement selon l'invention comprend un liant qui est constitué de 1 à 80 % en poids de résines thermoplastique(s) solide(s) en poudre, ayant une taille moyenne des particules de 0,5 à 200 µm, et de 1 à 80 % en poids d'au moins un polymère contenant des groupes hydroxyles, la composition contenant aussi un agent réticulant pour le(s) polymère(s) contenant des groupes hydroxyles et 19 à 80 % en poids d'au moins un solvant organique du (des) polymère(s) contenant des groupes hydroxyles, ayant un point d'ébullition de 140°C à 310°C.

Par résines thermoplastiques, on entend les polymères thermoplastiques ayant un point de ramollissement compris entre 110 et 230°C, et de préférence les polyamides.

Comme polyamides appropriés, on peut mentionner les polymères constitués d'un ou plusieurs acides ω-aminomonocarboxyliques ayant 6 à 12 atomes de carbone par molécule ou les lactames correspondants, par exemple : le polycaprolactame (PA-6), le polymère de l'acide ω-amino-undécanoïque (PA-11) et le polylauryllactame (PA-12) ou les copolymères par exemple du caprolactame et de l'acide ω-amino-undécanoïque (PA-6/11), du caprolactame et du lauryllactame (PA 6/12) et du caprolactame, de l'acide, ω-amino-undécanoïque et du lauryllactame (PA-6/11/12).

Les polyamides appropriés sont également les produits de polycondensation d'une diamine, par exemple: l'hexaméthylènediamine, et d'un acide dicarboxylique, par exemple: l'acide adipique, l'acide sébacique, l'acide dodécanedicarboxylique et l'acide téréphtalique. Des exemples représentatifs de ces polyamides comprennent le poly(hexaméthylène-adipamide) (PA-6.6), le poly (hexaméthylènesébacamide) (PA-6.10), et le poly(hexaméthylène-dodécanédicarboxamide) (PA-6.12). Eventuellement, on peut utiliser des mélanges de polyamides, sous réserve que leur point de ramollissement soit dans la gamme de 110-230°C. On préfère utiliser le PA-11, PA-12, le PA-6/12 et/ou le PA-12.12, seuls ou en mélange.

Par résines thermoplastiques on entend également les polyétheramides et parmi eux les polyétheresteramides, notamment ceux décrits dans les brevets FR 2273021 et FR2401947.

Les poudres peuvent être obtenues par broyage de polymères ou par polymérisation directe à la granulométrie souhaitée telle que décrite notamment dans le brevet EP 192515.

Selon l'invention, le point de ramollissement des résines thermoplastiques est dans la gamme de 110°C à 230°C, de préférence de 120°C à 210°C. Le point de ramollissement est généralement déterminé à l'aide d'un banc de Koefler.

Le liant comprend comme second composant 1 à 80 % en poids, de préférence 35 à 75 % en poids, d'au moins un polymère contenant des groupes hydroxyles ayant une masse moléculaire moyenne en nombre de 800 à 20 000, de préférence de 1000 à 10000, et une fonctionnalité hydroxyle de 1,5 à 6, de préférence 1,8 à 5.

Comme polymère contenant des groupes hydroxyles, on peut de façon générale employer un polyacrylate, une résine époxy ou un polyester ayant le poids moléculaire et la fonctionnalité hydroxyle requis. La résine de polyester est généralement constituée d'un ou plusieurs alcools aliphatiques et/ou cycloaliphatiques di- tri- et/ou multivalents et éventuellement monovalents et d'un ou plusieurs acides carboxyliques aliphatiques, cycloaliphatiques et/ou aromatiques di- tri- et/ou multivalents et éventuellement monovalents et/ou de dérivés de ces alcools ou acides carboxyliques, tels que les composés époxy, les esters ou les anhydrides d'acides. Des exemples des alcools ou de leurs dérivés appropriés comprennent l'alcool laurylique, l'alcool benzylique, le cyclohexanol, l'éthylèneglycol, le 1,2-propanediol, l'oxyde de propylène, le 1,3-propanediol, le 2,2-dyméthyl-1,3-propanediol, le 1,2-butanediol, le 1,3-butanediol, le 1,4-butanediol, le 1,5-pentanediol, le 3-méthyl-1,5-pentane-diol, le 1,6-hexanediol, le 2-hexyl-1,6-hexanediol, le 2,2,4-triméthyl-1,6-hexanediol, le 2,4,4-triméthyl-1,6-hexanediol, le 1,4-diméthylolcyclohexane, le 2,2-bis-(4-hydroxycyclohexyl)-propane, le 2,2-bis (p-phénylènoxyéthanol)propane, le 2,2-bis(p-phénylénoxypropanol-2) propane,le glycérol, le glycidol, le triméthyloléthane, le 1,1,1-triméthylolpropane, l'acide diméthylolpropionique, le pentaérythritol, les produits d'éthérification de diols et de polyols, par exemple du di- et triéthylèneglycol, du polyéthylèneglycol, du di-, tri-,tétra-et pentaérythritol et l'ester de néopentylglycol de l'acide hydroxypivalique (ester-diol 204). On préfère utiliser des diols et/ou des triols ayant 2 à 12 atomes de carbone successifs. Plus particulièrement, on utilise un diol et/ou un triol ayant 2 à 8 atomes de carbone, par exemple: l'éthylèneglycol, le 2,2-diméthyl-1,3-propanediol, le 2-méthyl-2-propyl-1,3-propanediol, le glycérol, le triméthyloléthane et le 1,1,1-triméthylolpropane.

Comme exemples d'acides carboxyliques ou de leurs dérivés appropriés, on peut mentionner l'acide benzoïque, des acides gras ramifiés ou non ramifiés, par exemple: l'acide valérique, l'acide heptanoïque, l'acide 2-éthylhexanoïque, l'acide pélargonique, l'acide isononanoïque, l'acide laurique, l'acide gras d'huile de coco, l'acide gras d'huile de lin, l'acide gras d'huile de tournesol, l'acide gras de tallöl, l'acide linoléique, l'acide linolénique, l'acide stéarique et les acides gras ramifiés ayant 18 à 22 atomes de carbone; des acides dicarboxyliques (cyclo)aliphatiques, par exemple: l'acide maléique ou son anhydride, l'acide fumarique, l'acide itaconique, l'acide citraconique, l'acide malonique, l'acide succinique, l'acide glutarique, l'acide adipique, l'acide azélaïque, l'acide triméthyladipique, l'acide tétrahydrophtalique, l'acide hexahydrophtalique, l'acide endométhylénetétrahydrophtalique et l'acide hexachloroendométhylénetétrahydrophtalique; des acides carboxyliques aromatiques, par exemple: l'acide o-phtalique ou son anhydride, l'acide dichlorophtalique, l'acide isophtalique, l'acide téréphtalique, le téréphtalate de diméthyle, l'acide trimellitique et l'acide pyromellitique. On préfère utiliser un acide (cyclo)aliphatique ou aromatique di-ou tricarboxylique ayant 4 à 10 atomes de carbone, plus particulèrement l'acide adipique, l'acide azélaïque et/ou l'acide isophtalique.

On préfère utiliser un polyester aromatique ou non aromatique saturé. La résine de polyester a généralement un indice d'acide dans la gamme de 0 à 70, de préférence de 0 à 35 et mieux de 0 à 25.

Pour que les propriétés du revêtement obtenu finalement soient encore améliorées, il peut être souhaitable d'utiliser une résine de polyester contenant du silicium que l'on prépare par mise en réaction d'une partie des groupes hydroxyles d'un polyester hydroxylique avec les groupes alcoxy d'un composé de type alcoxysilane. Il en résulte le départ de l'alcanol correspondant et la liaison du composé silicié à la résine de polyester par un ou plusieurs ponts ethers. En plus des groupes alcoxy, tels que les groupes méthoxy et les groupes butoxy, les composés de silane que l'on utilise contiennent généralement des substituants hydrocarbonés, tels que des groupes méthyles et des groupes phényles. Comme exemples de composés siliciés appropriés, on peut mentionner les composés répondant aux formules générales :

SiR₁(OR₂)₃, Si(R₁)₂(OR₂)₂, Si(R₁)₃OR₂ et

R₁Si(OR₂)₂OSi(R₁)₂OSi(R₁)₂OR₂

dans lesquelles R₁ représente un groupe hydrocarboné ayant 1 à 8 atomes de carbone, par exemple: un groupe méthyle, un groupe éthyle ou un groupe phényle, et R₂ est un groupe alkyle ayant 1 à 4 atomes de carbone, par exemple : un groupe méthyle, un groupe ethyle ou un groupe butyle. Généralement, ces composés d'addition, composé silicié-polyester, contiennent le composé silicié en une quantité de 5 à 40 % en poids.

Comme agent de réticulation de(s) polymères contenant des groupes hydroxyles, on peut citer les aminoplastes contenant des groupes N-méthylols et/ou des groupes N-méthyloléthers.

Des exemples appropriés de ces aminoplastes sont les aminoplastes que l'on peut obtenir par réaction d'un aldéhyde, par exemple : le formaldéhyde, avec un composé contenant des groupes amino ou des groupes amido, tels que la mélamine, l'urée, la N,N'-éthylène-urée, le dicyandiamine et la benzoguanamine; pour la préparation de ces composés, on peut se référer à Houben-Weyl, Methoden der organischen Chemie; volume 14/2, pp 319-371 (1963). On préfère que les composés décrits ci-dessus soient partiellement ou totalement éthérifiés avec des alcools contenant 1 à 6 atomes de carbone, par exemple avec le méthanol, l'éthanol, le n-propanol, l'isopropanol, le n-butanol, l'isobutanol, l'alcool amylique, l'hexanol ou des mélanges des alcools envisagés ci-dessus. En particulier, on utilise une méthylolmélamine ayant 4 à 6 groupes méthylols par molécule de mélamine, au moins 3 groupes méthylols étant éthérifiés avec du méthanol, de l'éthanol, un propanol ou un butanol ou un produit de condensation éthérifié par le butanol du formaldéhyde et de la N,N'-éthylénediurée. Plus particulièrement, on utilise une hexaalcoxyméthylmélamine dont le groupe alcoxy contient 1 à 4 atomes de carbone.

Comme agent de réticulation, on utilise de préférence des composés isocyanates aromatiques, aliphatiques ou cycloaliphatiques, et de préférence les diisocyanates.

Dans ce cas, le couple polymère à fonctions hydroxyles//isocyanate est dénommé polyuréthanne.

A titre d'exemple de diisocyanate, on peut citer l'hexaméthylènediisocyanate-1,6 (HDT), le 4,4'-diphényl-méthane-diisocyanate (HMDI) et le 3-isocyanatométhyl-3,5,5-triméthylcyclohexylisocyanate (IPDI), particulièrement préféré par la demanderesse.

On peut également utiliser un agent de blocage, et avantageusement l'ε- caprolactame afin de transformer les isocyanates en des substances inactives à basse température.

Les polyuréthannes préférés sont notamment décrits dans la demande de brevet FR 2 243 983 et sont constitués de
* de 50 à 90 % en poids d'au moins un polyester de haute masse moléculaire contenant des groupes hydroxyles, majoritairement à base d'acides dicarboxyliques aromatiques et de diols et/ou de triols ayant 4 à 12 atomes de carbone.
* de 10 à 50 % en poids de produits d'addition bloqués par de l'ε- caprolactame, à base de 3-isocyanatométhyl-3,5,5-triméthylcyclohexyle, lesdits produits d'addition bloqués contenant de préférence de 0,01 à 5 % en poids de groupes isocyanates libres.

L'agent de durcissement ou de réticulation est présent dans la composition de revêtement en une quantité telle que le rapport molaire des groupes réactifs de l'agent réticulant à ceux du polymère contenant des groupes hydroxyles soit dans la gamme de 0,6 à 1,5 de préférence de 0,7 à 1,3.

La composition de revêtement superficiel que l'on utilise dans le procédé selon l'invention contient comme quatrième constituant essentiel au moins un solvant organique du polymère contenant des groupes hydroxyles ayant un point d'ébullition de 140°C à 310°C, en une quantité de 19 à 80 % en poids, de préférence de 40 à 60 % en poids, par rapport à la totalité de la composition. On préfère que le point d'ébullition du solvant soit d'au moins 200°C.

Des exemples représentatifs des solvants comprennent l'alcool benzylique, des hydrocarbures aromatiques ayant un point d'ébullition d'au moins 150°C (commercialisés sous les marques Solvesso-100, Solvesso-150 et Solvesso-200 par la Société ESSO), l'éther éthylique ou l'éther butylique de l'acétate d'éthylèneglycol, l'isophorone, l'isobutyrate de 2,2,4-triméthyl-1,3-pentanediol, le diisobutyrate de 2,2,4-triméthyl-1,3-pentanediol, la cyclohexanone, le glutarate de diméthyle, le sébacate de diméthyle, l'adipate de diméthyle, l'éther butylique du diglycol, le diméthyl-formamide, la N-méthylpyrrolidone, le carbonate de propylène et le diisopropylbenzène. On utilise très souvent des mélanges des solvants envisagés ci-dessus.

La composition du revêtement peut éventuellement contenir un ou plusieurs adjuvants et additifs habituels, par exemple : des agents de dispersion des agents anticoulures modifiant les propriétés rhéologiques, des agents antimousses, des stabilisants vis-à-vis des UV, des agents d'écoulement, des plastifiants, des agents améliorant le brillant et des promoteurs de durcissement, tels que l'acide p-toluènesulfonique, ou des produits bloqués de tels accélérateurs.

Les pigments ou colorants utilisés sont exclusivement dispersés dans tout ou partie de(s) résine(s) thermoplastique(s) en poudre, le reste de la composition étant incolore.

Les pigments appropriés appartiennent aux types habituels, c'est-à-dire les pigments acides, neutres ou basiques, qui peuvent être de nature organique ou minérale. Si on le désire, les pigments peuvent avoir été préalablement traités pour modifier leurs propriétés. Comme exemples de pigments appropriés, on peut mentionner le bioxyde de titane, l'oxyde rouge de fer, l'orangé de molybdate, le chromate de plomb, le noir de carbone et les pigments de phtalocyanine. On entend ici également par pigments, les pigments métalliques tels que l'aluminium et l'acier inoxydable. Le rapport pondéral du (ou des) pigment(s) à la totalité des résines thermoplastiques est généralement dans la gamme de 0,005 à 0,5, de préférence de 0,005 à 0,25.

La ou (les) sous-couche(s) éventuelle(s) comprend au moins un polymère contenant des fonctions hydroxyles , au moins un agent réticulant, au moins un solvant organique tels que définis précedemment.

L'agent de réticulation est présent dans la composition de sous-couche en une quantité telle que le rapport molaire des groupes réactifs de l'agent réticulant à ceux du (ou des) polymère(s) contenant des groupes hydroxyles soit dans la gamme de 0,6 à 1,5 de préférence 0,7 à 1,3.

Le(s) polymère(s) contenant des fonctions hydroxyles constitue(nt) 20 à 90 % en poids du total de la composition, de préférence 20 à 50 % en poids.

Le(s) solvant(s) constitue(nt) de 10 à 60 % en poids du total de la composition et de préférence 20 à 40 % en poids.

Les pigments ou colorants sont de même nature que ceux indiqués ci-dessus. Le rapport pondéral du (ou des) pigment(s) à la totalité de la composition de(s) sous-couche(s) est généralement dans la gamme de 0,1 à 1. On peut utiliser différents pigments, à condition toutefois que la couleur obtenue soit uniforme à l'oeil.

Les différentes couches du revêtement multicolore selon l'invention peuvent être appliquées selon diverses techniques d'application liquide, telles que application à la vernisseuse (au rouleau) en direct ou "reverse", par projection au pistolet (pulvérisation) à air mixte ou sans air, au rideau, mais de préférence par un procédé de type couchage sur bande appelé également Coil Coating.

L'application selon un procédé de type couchage sur bande est particulièrement préférée par la demanderesse. Elle est notamment décrite dans Metal Finishing, septembre 1981, pages 21-24.

Après enduction du substrat à l'aide de(s) sous-couche(s), on procède à la cuisson du revêtement pendant 20 à 60 s en général dans un four porté à une température comprise entre 300 et 400°C et telle que la température maximale atteinte par le substrat ne dépasse pas 250°C.

Le substrat est ensuite refroidi, par exemple à l'air ambiant ou par immersion dans l'eau puis séché à l'air. Il est alors prêt à recevoir le revêtement superficiel qui est cuit et refroidi dans des conditions similaires à celles correspondant aux sous-couche(s).

Les substrats sur lesquels on applique le revêtement multicolore selon l'invention peuvent être de nature diverse mais doivent supporter le passage au four nécessaire à la filmication du revêtement multicolore.

En général, les substrats les plus couramment utilisés sont des substrats métalliques (acier, fer, aluminium, alliages) mais on peut également utiliser des substrats en bois, plastique, verre ou papier.

Avant enduction, le substrat peut subir un ou plusieurs traitements de surface afin d'améliorer l'adhérence du revêtement. A titre d'exemples, on peut citer le dégraissage de la surface du substrat, des traitements de type oxydant tels que flammage, décharge coronna, action d'un plasma.

Les matériaux composites obtenus à l'aide de revêtement multicolore sont constitués
- d'un revêtement superficiel d'épaisseur comprise entre 10 et 100 µm et de préférence entre 10 et 30 µm
- éventuellement d'une ou plusieurs sous-couches d'épaisseur totale comprise entre 5 et 40 µm et de préférence entre 10 et 30 µm.
- d'un substrat, par exemple métallique d'épaisseur variable.

De tels matériaux composites sont particulièrement adaptés pour la réalisation de pièces d'aspect.

Les exemples suivants illustrent l'invention sans toutefois la limiter.

Les quantités indiquées, sauf mention contraire, sont exprimées en poids.

### EXEMPLE 1

### A - PREPARATION DU REVETEMENT (SOUS-COUCHE(S) ET COUCHE(S) SUPERFICIELLE(S)

On prépare une pâte de broyage en mélangeant une partie des constituants du revêtement en dispersion dans un ou plusieurs solvants.

On opère dans un disperseur à billes.

Une fois la dispersion effectuée, on ajoute le complément du revêtement et mélange intimement les constituants puis on effectue la mise à viscosité du revêtement.

### B - CONSTITUANTS DE LA SOUS-COUCHE

### 1° Pâte de broyage

Elle comprend
- résine polyuréthanne à 60% dans un mélange 2/1 de xylène et d'acétate d'éthyl glycol. La résine polyuréthanne (polyester à terminaisons hydroxyles/IDPI/ε-caprolactame) a une viscosité mesurée à 25°C selon la norme DIN 51 562 égale à 10 ± 1,5 d Pa.s et sa densité à 25°C mesurée selon la norme DIN 51 757 est égale à 1,06. 22,20
- dixoyde de titane (pigment blanc) (d=3,9) 22,20
- mélange 50/50 d'acétate de butyl diglycol et de Solvesso 200 ^{R} commercialisé par la Société Esso (mélange d'hydrocarbures aroma tiques) de point d'ébullition compris entre 224 et 285°C) 11,10

Complément
- résine polyuréthanne de mêmes caractéristiques que celle utilisée dans la pâte de broyage 24,05
- agent d'écoulement 0,20
- dibutyllaurate d'étain à 40% dans l'acétate de butyl glycol 0,70

Mise à viscosité
- mélange 50/50 d'acétate de butyl diglycol et de Solvesso 200^{R} 19,50

Pour la composition de la sous-couche, le rapport pigment/liant = 0,8 et l'extrait sec = 50%

### C. CONSTITUANTS DE LA COUCHE SUPERFICIELLE

- polymère à fonctions hydroxyles: résine polyuréthane décrite sous B 75,85
- résine thermoplastique: PA-11 (Mn=15000) de granulométrie comprise entre 20 et 80 µm
   . PA-11 coloré en vert (8% de pigments) 1,50
   . PA-11 coloré en bleu (5% de pigments) 1,50
   . PA-11 coloré en blanc (25% de pigments) 1,50

Mise à viscosité
- mélange 50/50 d'acétate de butyldiglycol et de Solvesso 200^{R} 19,65

### D - MISE EN OEUVRE

La sous-couche est appliquée à la barre puis est réticulée pendant 40s dans un four à 340°C (la température maximale du substrat étant de 240°C)

On refroidit le substrat ainsi revêtu par immersion dans l'eau puis le sèche à l'air ambiant.

Les conditions d'application, de réticulation et de refroidissement de la couche superficielle sont identiques à celles utilisées pour la sous-couche.

On obtient un matériau composite constitué
- d'une sous-couche de couleur blanche d'épaisseur égale à environ 20 µm
- d'une couche superficielle d'épaisseur égale à environ 20 µm
- d'un substrat en aluminium traité BONDER^{R} 714 d'épaisseur 0,8 mm.

### EXEMPLE 2

Dans les mêmes conditions qu'en 1, on réalise un matériau composite constitué
- d'une sous-couche de composition et d'épaisseur identiques à celles de l'exemple 1
- d'une couche superficielle d'épaisseur identique à celle de l'exemple 1
- d'un substrat de nature et d'épaisseur identiques à celui de l'exemple 1.

Les constituants de la couche superficielle sont les suivants:
- polymère à fonctions hydroxyles: résine polyuréthanne décrite sous 1.B
- résine thermoplastique: PA-11 (Mn=15000) de granulométrie comprise entre 20 et 80 µm
   . PA-11 coloré en vert (8% de pigments) 1,50
   . PA-11 coloré en bleu (5% de pigments) 1,50
   . PA-11 coloré en blanc (25% de pigments) 1,50
   . PA-11 naturel 1,50
   Mise en viscosité
   - mélange 50/50 d'acétate de butyldiglycol et de Solvesso 200^{R} 18,15

L'extrait sec de la composition est égal à 51,5%

Lorsqu'on compare l'aspect des revêtements des exemples 1 et 2, dont la teneur en pigments au sein du PA-11 est identique, on constate que l'aspect multicolore du revêtement de l'exemple 2 est moins affirmé: les tons sont plus pastel.

## Revendications

1. Revêtement multicolore constitué
. d'éventuellement une ou plusieurs sous couche(s) de teinte uniforme comprenant 20 à 90 % en poids d'au moins un polymère contenant des fonctions hydroxyles, au moins un agent réticulant, au moins un solvant organique, ayant un point d'ébullition compris entre 140 et 310°C,
. d'un revêtement superficiel comprenant une dispersion de 1 à 80 % en poids de poudres de résines thermoplastiques colorées dans la masse et éventuellement de poudres non colorées, ayant une taille moyenne des particules de 0,5 à 200 µm,
dans un vernis comprenant 1 à 80 % d'au moins un polymère contenant des groupes hydroxyles, au moins un agent réticulant pour le(s) polymère(s) contenant des groupes hydroxyles et 19 à 80 % d'au moins un solvant organique, ayant un point d'ébullition compris entre 140 et 310°C, caractérisé en ce que le vernis est incolore et en ce que la (ou les) sous couche(s) éventuelle(s) est de teinte uniforme à l'oeil et différente d'au moins une des teintes des résines thermoplastiques du revêtement superficiel.

2. Revêtement multicolore selon la revendication 1, caractérisé en ce que les poudres thermoplastiques sont de teintes différentes.

3. Revêtement multicolore selon la revendication 1 ou 2, caractérisé en ce que les polymères contenant des groupes hydroxyles sont choisis parmi les polyacrylates, des résines époxy, et de préférence les polyesters.

4. Revêtement multicolore selon l'une quelconque des revendications 1 à 3, caractérisé en ce que les agents de réticulation sont des aminoplastes et de préférence des composés isocyanates.

5. Revêtement multicolore selon l'une quelconque des revendications 1 à 4, caractérisé en ce que les résines thermoplastiques sont choisies parmi les polyamides ou les polyéthéramides et de préférence parmi le PA-11, PA-12, le PA-6/12 et/ou le PA-12-12 seuls ou en mélange.

6. Film multicolore résultant du durcissement du revêtement multicolore tel que défini dans l'une quelconque des revendications 1 à 5.

7. Matériau composite comprenant un substrat, de préférence métallique et le film multicolore selon la revendication 6 tel que
. le film résultant du durcissement du revêtement superficiel a une épaisseur comprise entre 10 et 100 µm et de préférence entre 10 et 30 µm,
. et le film résultant du durcissement et de la ou (des) sous-couche(s) éventuelle(s) a une épaisseur comprise entre 5 et 40 µm et de préférence entre 10 et 30 µm.

8. Procédé de fabrication d'un matériau composite tel que défini à la revendication 7 par enduction, de préférence par couchage sur bande, puis cuisson de la ou des couches successives du revêtement multicolore.

## Patentansprüche

1. Mehrfarbige Beschichtung, die besteht aus
- gegebenenfalls einer oder mehreren einfarbigen Grundschichten, die 20 bis 90 Gew.-% mindestens eines Polymers mit Hydroxygruppen, mindestens ein Vernetzungsmittel und mindestens ein organisches Lösungsmittel mit einem Siedepunkt von 140 bis 310 °C enthalten,
und
- einer Oberflächenbeschichtung, die eine Dispersion von 1 bis 80 Gew.-% in der Masse gefärbter Pulver aus thermoplastischen Harzen und gegebenenfalls farbloser Pulver enthält, wobei die mittlere Teilchengröße 0,5 bis 200 µm beträgt, in einem Lack, der 1 bis 80 % mindestens eines Polymers mit Hydroxygruppen, mindestens ein Vernetzungsmittel für das bzw. die Hydroxygruppen enthaltenden Polymeren und 19 bis 80 % mindestens eines organischen Lösungsmittels mit einem Siedepunkt von 140 bis 360 °C enthält,
dadurch gekennzeichnet, daß
der Lack farblos ist und die gegebenenfalls vorhandene(n) Grundschicht(en) eine für das Auge gleichmäßige Farbe aufweisen, die anders ist als mindestens eine der Farben des thermoplastischen Harzes in der Oberflächenbeschichtung.

2. Mehrfarbige Beschichtung nach Anspruch 1, dadurch gekennzeichnet, daß die thermoplastischen Pulver unterschiedliche Farben aufweisen.

3. Mehrfarbige Beschichtung nach Anspruch 1 oder 2, dadurch gekennzeichnet, daß die Polymeren mit Hydroxygruppen unter Polyacrylaten, Epoxyharzen und vorzugsweise Polyestern ausgewählt sind.

4. Mehrfarbige Beschichtung nach einem der Ansprüche 1 bis 3, dadurch gekennzeichnet, daß die Vernetzungsmittel Aminoplaste und vorzugsweise Isocyanatverbindungen sind.

5. Mehrfarbige Beschichtung nach einem der Ansprüche 1 bis 4, dadurch gekennzeichnet, daß die thermoplastischen Harze unter Polyamiden und Polyetheramiden und vorzugsweise unter PA-11, PA-12, PA-6/12 und/oder PA-12-12 sowie deren Gemischen ausgewählt sind.

6. Mehrfarbige Schicht, die durch Härtung der mehrfarbigen Beschichtungen nach einem der Ansprüche 1 bis 5 resultiert.

7. Verbundwerkstoff, der aus einem vorzugsweise metallischen Substrat und der mehrfarbigen Schicht nach Anspruch 6 besteht, wobei
- die nach der Härtung der oberflächenbeschichtung resultierende Schicht eine Dicke von 10 bis 100 µm und vorzugsweise 10 bis 30 µm aufweist
und
- die nach der Härtung der gegebenenfalls vorhandenen Grundschicht oder Grundschichten resultierende Schicht eine Dicke von 5 bis 40 µm und vorzugsweise 10 bis 30 µm aufweist.

8. Verfahren zur Herstellung eines Verbundwerkstoffs nach Anspruch 7 durch Beschichtung, vorzugsweise durch Coil-Coating-Auftrag, und anschließende Härtung der Schicht oder der aufeinanderfolgenden Schichten der mehrfarbigen Beschichtung.

## Claims

1. Multicoloured coating consisting of
. optionally, one or more sub-layer(s) of uniform shade comprising 20 to 90 % by weight of at least one polymer containing hydroxyl functions, at least one crosslinking agent and at least one organic solvent having a boiling point of between 140 and 310°C,
. a surface coating comprising a dispersion of 1 to 80 % by weight of bulk-coloured thermoplastic resin powders and optionally of colourless powders, having an average particle size of 0.5 to 200 µm,
in a varnish comprising 1 to 80 % of at least one polymer containing hydroxyl groups, at least one crosslinking agent for the polymer(s) containing hydroxyl groups and 19 to 80 % of at least one organic solvent having a boiling point of between 140 and 310°C, characterised in that the varnish is colourless and in that the optional sub-layer(s) has or have a uniform shade to the eye and different from at least one of the shades of the thermoplastic resins of the surface coating.

2. Multicoloured coating according to Claim 1, characterised in that the thermoplastic powders are of different shades.

3. Multicoloured coating according to Claim 1 or 2, characterised in that the polymers containing hydroxyl groups are chosen from polyacrylates, epoxy resins and preferably polyesters.

4. Multicoloured coating according to any one of Claims 1 to 3, characterised in that the crosslinking agents are aminoplasts and preferably isocyanate compounds.

5. Multicoloured coating according to any one of Claims 1 to 4, characterised in that the thermoplastic resins are chosen from polyamides or polyether amides and preferably from PA-11, PA-12, PA-6/12 and/or PA-12-12, on their own or as a mixture.

6. Multicoloured film resulting from the curing of the multicoloured coating as defined in any one of Claims 1 to 5.

7. Composite material comprising a substrate, preferably a metal substrate, and the multicoloured film described in Claim 6 such that
- the film resulting from the curing of the surface coating has a thickness of between 10 and 100 µm and preferably between 10 and 30 µm,
- and the film resulting from the curing of the optional sub-layer(s) has a thickness of between 5 and 40 µm and preferably between 10 and 30 µm.

8. Process for the production of a composite material as defined in Claim 7 by means of coating, preferably by strip coating, followed by baking of the layer or the successive layers of the multicoloured coating.
